# EUROPÄISCHE PATENTSCHRIFT

(11) **EP 3 181 901 B1**
(45) Veröffentlichungstag und Bekanntmachung des Hinweises auf die Patenterteilung: **14.04.2021**
(21) Anmeldenummer: 16201899.8
(22) Anmeldetag: 02.12.2016
(51) Int. Cl.: F16C 23/06, F03D 80/70, F16C 33/66

(54) **LAGERSCHMIERUNG**
BEARING LUBRICATION
GRAISSAGE POUR PALIERS

(30) Priorität: 17.12.2015 DE 102015016343
(43) Veröffentlichungstag der Anmeldung: 21.06.2017
(73) Patentinhaber: Siemens Gamesa Renewable Energy Service GmbH, 22297 Hamburg (DE)
(72) Erfinder: BROOCKS, Florian, 24105 Kiel (DE); BROOCKS, Alexander, 24783 Osterrönfeld (DE); HILDEBRANDT, Arved, 24118 Kiel (DE); HENNING, Michael, 24598 Boostedt (DE)
(74) Vertreter: Wallinger Ricker Schlotter Tostmann

(56) Entgegenhaltungen:
- EP-A1- 2 808 097
- EP-A1- 2 937 564
- EP-B1- 1 801 415
- US-A1- 2011 293 425
- US-A1- 2013 068 253

## Beschreibung

Die Erfindung betrifft ein Verfahren zum Betreiben einer Windenergieanlage, wobei die Windenergieanlage ein Lager aufweist, das mit einem ersten Schmierstoff geschmiert wird.

Die Erfindung betrifft ferner eine Windenergieanlage mit einem Rotor und einem Lager, in dem der Rotor gelagert ist, wobei eine erste Lagerschmiervorrichtung vorgesehen ist, mittels der eine Fettschmierung mit einem ersten Schmierstoff des Lagers durchgeführt wird oder durchführbar ist.

Entsprechende Lagerschmierungen sind beispielsweise aus DE 10 2015 008 074.1 bekannt. Dort wird mittels eines Schmierfetts, das direkt auf die Lagerflächen eines Wälzlagers aufgespritzt wird, eine sehr verlässliche Schmierung des Lagers durchgeführt.

EP 1 801 415 B1 befasst sich damit, die Schmierfettzufuhr in Abhängigkeit der Drehzahl, der Umdrehungsanzahl und/oder der Temperatur zu steuern.

EP 2 808 097 A1 offenbart ein Verfahren und ein System zum Spülen von gehärtetem Schmierstoff in einem Lager.

EP 2 937 564 A1 offenbart das Schmieren eines Lagers einer Windkraftanlage, bei der eine Reinigungsflüssigkeit in ein verschließbares Loch gesprüht wird und so auf das Hauptlager gelangt, um Schmierstoff zu entfernen.

US 2013/0068253 A1 offenbart ein System und ein Verfahren zum Heizen einer Spülflüssigkeit, die in einem transportablen Ölsumpf oder Reservoir enthalten ist, wobei diese Spülflüssigkeit durch ein Lagergehäuse gespült wird, um Ablagerungen von Schmierstoff zu entfernen.

Beim Einlaufen eines Lagers, insbesondere eines Wälzlagers, kann es zu einem erhöhten Verschleiß kommen. Dies hängt damit zusammen, dass sich die Oberflächen von Wälzkörpern und Lagerring aneinander angleichen und sich Rauheitsspitzen einglätten. Dies äußert sich in einem erhöhten Anteil von Verschleißpartikeln, die die tribologischen Eigenschaften eines Wälzlagers beeinträchtigen können. Zudem kann es hierbei zu einem erhöhten abrasiven Verschleiß des Lagers kommen.

Es ist Aufgabe der vorliegenden Erfindung, insbesondere beim Einlaufen eines Lagers, insbesondere Wälzlagers, dafür zu sorgen, dass die Lebensdauer des Lagers verlängert und die Schädigung verringert wird.

Gelöst wird diese Aufgabe durch ein Verfahren zum Betreiben einer Windenergieanlage, wobei die Windenergieanlage ein Lager aufweist, das mit einem ersten Schmierstoff geschmiert wird, wobei das Lager zusätzlich mit einem zweiten Schmierstoff gespült wird, der eine höhere Mobilität als der erste Schmierstoff aufweist und wobei die Menge des in das Lager pro Zeiteinheit eingebrachten zweiten Schmierstoffs wenigstens doppelt so groß ist wie die Menge des in das Lager eingebrachten ersten Schmierstoffs. Die Zeiteinheit kann hierbei beispielsweise eine Stunde sein.

Durch die Verwendung eines zweiten Schmierstoffs, mittels dessen das Lager zusätzlich zu der Schmierung mit dem ersten Schmierstoff noch gespült wird, können effizient Verschleißpartikel aus dem Lager gespült werden, wodurch die Lebensdauer des Lagers deutlich erhöht wird.

Der erste Schmierstoff und der zweite Schmierstoff können Schmierstoffe der gleichen Sorte sein. Die Konsistenzklasse der Schmierstoffe kann sich allerdings unterscheiden. Der erste Schmierstoff und der zweite Schmierstoff können auch identisch sein. Vorzugsweise ist die Menge des pro Zeiteinheit eingebrachten zweiten Schmierstoffs wenigstens dreimal, insbesondere wenigstens fünfmal, insbesondere wenigstens achtmal so groß, wie die Menge des ersten Schmierstoffs. Vorzugsweise ist die Menge des pro Zeiteinheit eingebrachten zweiten Schmierstoffs höchstens zwanzigmal so groß, insbesondere höchstens fünfzehnmal so groß, wie die Menge des ersten Schmierstoffs.

Vorzugsweise wird das Spülen in Spülintervallen, insbesondere über eine vorgebbare Spülzeit und/oder mit einer vorgebbaren Menge an zweitem Schmierstoff ausgeführt. Hierdurch kann sehr gezielt ein Spülen vorgenommen werden. Hierbei kann auch die Menge an zweitem Schmierstoff optimiert werden, so dass bei möglichst wenig Menge an zweitem Schmierstoff ein effizientes Spülen des Lagers vorgenommen wird.

Vorzugsweise sind die zeitlichen Abstände der Spülintervalle vorgebbar.

Vorzugsweise wird die Spülzeit bzw. das Vorsehen eines Spülintervalls und/oder die Spüldauer und/oder die Spülmenge aufgrund eines Messsignals vorgegeben. Beispielsweise kann die Temperatur im Lager überwacht werden und bei einer ungewöhnlich hohen Temperatur des Lagers, die deutlich über der üblichen Lagertemperatur von beispielsweise 50°C liegt, kann vorgesehen sein, dass eine entsprechende Spülung vorgenommen wird, da zu erwarten ist, dass aufgrund von erhöhter Reibung oder Abrieb das Lager sich entsprechend erwärmt hat und eine entsprechende Spülung stattfinden sollte. Es kann auch mit einem Vibrationssensor überprüft werden, ob das Lager ruhig läuft und bei entsprechend unruhigem Lauf bzw. entstehenden Vibrationen kann ein Signal ausgegeben werden, das für ein Spülintervall oder mehrere hintereinander auszuführende Spülintervalle sorgt. Zudem kann mittels eines Sensors auch eine Schmierfilmdicke oder ein Schmierfilmdurchbruch detektiert werden, wobei ein Spülverfahren oder Spülprogramm initiiert wird, wenn ein Schmierfilmdurchbruch oder eine zu geringe Schmierfilmdichte detektiert wird.

Vorzugsweise sind die zeitlichen Abstände der Spülintervalle von wenigstens einem der folgenden Parameter abhängig: einer Umgebungstemperatur, einer Lagertemperatur, einer Drehzahl eines durch das Lager gelagerten Rotors, einer Anzahl von Umdrehungen des durch das Lager gelagerten Rotors und/oder einer Betriebsdauer der Windenergieanlage.

Vorzugsweise geschieht das Spülen des Lagers mit dem zweiten Schmierstoff in einem Spülintervall bei einem Druck, dessen obere Grenze und dessen untere Grenze vorgebbar sind.

Vorzugsweise ist ein Ventil zum Aufbauen eines Drucks im zweiten Schmierstoff bis zur oberen Druckgrenze vorgesehen, wobei bei Erreichen der oberen Druckgrenze das Ventil geöffnet wird, so dass der zweite Schmierstoff in das Lager eingelassen wird. Um den entsprechenden Druck im zweiten Schmierstoff aufzubauen, ist vorzugsweise eine Schmierstoffpumpe vorgesehen, die aus einem Schmierstoffbehälter über eine Zuleitung Schmierstoff in das Lager, insbesondere Rotorlager, befördert. In der Zuleitung zum Rotorlager ist ein Ventil, vorzugsweise ein Magnetventil, vorgesehen, das dazu verwendet wird, den für eine Einspritzung nötigen Druck aufzubauen. Das Ventil ist somit bis zu der oberen Druckgrenze geschlossen. Für den zweiten Schmierstoff ist vorzugsweise ein Schmierstoffsystem mit Pumpe, Zuführleitung und Ventil vorgesehen, das getrennt von einem Schmierstoffsystem für den ersten Schmierstoff ist. Sobald der nötige Einspritzdruck aufgebaut ist, der der oberen Druckgrenze entspricht, wird das Ventil geöffnet, um den zweiten Schmierstoff mit dem nötigen Druck in das Lager einzubringen. Der Druck kann beispielsweise mittels eines analogen oder digitalen Drucksensors oder Druckschalters gemessen werden und an ein Steuerungssystem oder eine Steuervorrichtung übertragen werden, um entsprechend das Ventil zu schalten. Entsprechend wird das Ventil wieder geschlossen, wenn die untere Druckgrenze erreicht ist.

So kann während eines Spülintervalls mehrfach der Druck entsprechend aufgebaut werden, das Ventil geöffnet werden und der zweite Schmierstoff in das Lager eingelassen werden, bis die untere Druckgrenze erreicht ist, das Ventil wieder geschlossen wird und der Druck wieder aufgebaut wird, bis die obere Druckgrenze erreicht ist usw.

Vorzugsweise sinkt der Druck beim Einlassen des zweiten Schmierstoffs in das Lager bis zu der unteren Druckgrenze ab, woraufhin das Ventil geschlossen wird und der Zufluss des zweiten Schmierstoffs in das Lager solange unterbrochen wird, bis der Druck des zweiten Schmierstoffs die obere Druckgrenze erreicht und das Ventil wieder öffnet. Dieser Zyklus kann mehrfach ausgeführt werden, beispielsweise zweifach, dreifach, vierfach, fünffach, sechsfach, siebenfach oder achtfach. Die Anzahl dieser Zyklen kann abhängig sein von der Lagertemperatur und/oder der Mobilität des zweiten Schmierstoffs. Das Schmierstoffverfahren kann beispielsweise über 300 Stunden ausgeführt werden, wobei jeweils ein Schmierzyklus alle halbe Stunde stattfindet.

Vorzugsweise ist der zweite Schmierstoff ein Schmierfett der NLGI Kategorie 00 oder ein Schmieröl. Der erste Schmierstoff ist vorzugsweise ein Schmierfett der NLGI Kategorie 0, 1 oder 2. Die NLGI des zweiten Schmierstoffs, das als Schmierfett ausgebildet ist, kann auch 000 sein.

Vorzugsweise wird das Verfahren zur Schmierung eines Großwälzlagers der Windenergieanlage verwendet.

Vorzugsweise wird der Druck des zweiten Schmierstoffs in einer Zuleitung zu dem Lager gemessen.

Die Aufgabe wird ferner gelöst durch eine Windenergieanlage mit einem Rotor und einem Lager, in dem der Rotor gelagert ist, wobei eine erste Lagerschmiervorrichtung vorgesehen ist, mittels der eine Fettschmierung mit einem ersten Schmierstoff des Lagers durchgeführt wird oder durchführbar ist, wobei zudem eine zweite Lagerschmiervorrichtung vorgesehen ist, mittels der das Lager mit einem zweiten Schmierstoff gespült wird oder spülbar ist, wobei der zweite Schmierstoff eine höhere Mobilität als der erste Schmierstoff aufweist und wobei die Menge des in das Lager pro Zeiteinheit einbringbaren oder eingebrachten Schmierstoffs wenigstens doppelt so groß ist wie die Menge des in das Lager eingebrachten oder einbringbaren ersten Schmierstoffs.

Bei dem Lager handelt es sich vorzugsweise um ein Wälzlager, insbesondere vorzugsweise ein Großwälzlager. Vorzugsweise weist die zweite Lagerschmiervorrichtung ein Schmierstoffreservoir, eine Schmierstoffpumpe und ein Ventil auf, wobei das Ventil bei einer oberen Druckgrenze öffnend und bei einer unteren Druckgrenze schließend ausgebildet ist. Die zweite Lagerschmiervorrichtung arbeitet vorzugsweise mit einem Schmierfett der NLGI Kategorie 00 oder 000.

Vorzugsweise sind ein Drucksensor und eine Ventilsteuervorrichtung vorgesehen. Ferner vorzugsweise ist eine Steuervorrichtung vorgesehen, mittels der das Spülen des Lagers mit dem zweiten Schmierstoff in Spülintervallen steuerbar ist. Hierzu wird auf das vorstehend beschriebene erfindungsgemäße und entsprechend beschriebene Verfahren verwiesen.

Erfindungsgemäß wird durch eine Schmiervorrichtung, insbesondere zweite Schmiervorrichtung, eine erhöhte Menge an zweitem Schmierstoff eingebracht, um Verschleißpartikel aus dem Lager zu spülen. Vorzugsweise wird hierbei ein Schmierstoff mit hoher Mobilität verwendet. Durch Verwendung eines Schmierstoffs mit hoher Mobilität können die Verschleißpartikel schnell und effizient aus dem Lager transportiert werden. Hierzu ist beispielsweise eine Labyrinthdichtung vorgesehen, durch das der Schmierstoff mit den Partikeln ausgetragen werden können. Durch die Schmiervorrichtung wird mittels einer angepassten Parametrierung gewährleistet, dass mehr Schmierstoff in das Wälzlager gefördert wird. Dies wird vorzugsweise mittels einer automatischen Steuerung umgesetzt. Die Aktivierung der Steuerfunktion kann in einem SCADA System durchgeführt werden. Das Spülverfahren wird vorzugsweise in Abhängigkeit von Umgebungstemperatur und/oder Drehzahl in definierten Zeitabständen eines Spülzyklus ausgeführt. Innerhalb eines Schmierzyklus bzw. innerhalb eines Spülzyklus wird vorzugsweise eine parametrierbare Anzahl an Schmiermittelinjektionen in das Lager durchgeführt. Sofern die Windenergieanlage am Netz angeschlossen ist, wird über einen ersten Timer das Spülverfahren vorzugsweise beendet, d.h. nach einer vorgebbaren Zeit wird das Spülverfahren beendet.

Nach dem Start des Spülverfahrens laufen, solange der erste Timer noch nicht abgelaufen ist, die Spülzyklen durch. Der erste Timer zählt hierbei die Zeit im Netzparallelbetrieb herunter und unterbricht bei Stillstand der Anlage. Sobald eine vorgebbare Drehzahl und/oder vorzugsweise eine vorgebbare Außentemperatur überschritten ist, zählt der erste Timer weiter. Das Zeitintervall des ersten Timers kann beispielsweise 300 Stunden sein.

Vorzugsweise ist zwischen zwei Schmierzyklen bzw. Spülzyklen eine Intervallzeit, d.h. Pausenzeit, vorgesehen. Die Länge der Pause kann vorgebbar sein oder abhängig sein von gemessenen Parametern wie die Umgebungstemperatur, die Lagertemperatur, die Drehzahl des durch das Lager gelagerten Rotors, einer Anzahl von Umdrehungen des durch das Lager gelagerten Rotors oder der Betriebsdauer der Windenergieanlage. Die Pausenzeiten können über einen zweiten Timer vorgegeben werden oder sein. Beispielsweise kann die Pausenzeit 30 Minuten sein. Es kann vorgesehen sein, bei einem Neustart der Steuerung der Windenergieanlage oder einem Netzausfall die Pausenzeit bzw. Intervallzeit als abgelaufen vorzusehen, damit beim Hochlauf der Windenergieanlage unmittelbar eine erfindungsgemäße Spülung stattfindet.

Zudem kann vorgesehen sein, die Funktion der zweiten Lagerschmiervorrichtung zu überprüfen. Dies kann beispielsweise dadurch geschehen, dass nach einem Schließen des Ventils und einem entsprechenden Druckaufbau innerhalb einer vorgebbaren Zeit das Signal "Ventil öffnen" überwacht wird. Falls innerhalb der vorgegebenen Zeit das Signal "Ventil öffnen" nicht generiert wird, können der Sensor, die Pumpe, die Schmierstoffzuleitung oder das Ventil defekt sein.

Die erste Lagerschmiervorrichtung und die zweite Lagerschmiervorrichtung können gemeinsame Komponenten aufweisen oder die erste Lagerschmiervorrichtung kann identisch zu der zweiten Lagerschmiervorrichtung sein. Bei den gemeinsamen Komponenten kann es sich um das Schmierstoffreservoir, die Schmierstoffpumpe und auch das Ventil sowie die Zuleitung handeln. Die höhere Mobilität des zweiten Schmierstoffes kann dann dadurch erzeugt werden, dass der erste Schmierstoff beispielsweise mit einer Heizung erhitzt wird oder erwärmt wird, um die Mobilität zu erhöhen, so dass der erste Schmierstoff auch als zweiter Schmierstoff verwendet werden kann. Das Erwärmen kann beispielsweise in der Zuleitung zum Lager geschehen. Bevorzugt sind allerdings unterschiedliche Schmierstoffe als erster und zweiter Schmierstoff.

Die Menge des einbringbaren oder eingebrachten zweiten Schmierstoffs kann bis zu zwanzigmal höher sein als die des einbringbaren oder eingebrachten ersten Schmierstoffs.

Weitere Merkmale der Erfindung werden aus der Beschreibung erfindungsgemäßer Ausführungsformen zusammen mit den Ansprüchen und der beigefügten Zeichnung ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnung beschrieben, wobei bezüglich aller im Text nicht näher erläuterten erfindungsgemäßen Einzelheiten ausdrücklich auf die Zeichnung verwiesen wird. Es zeigt:

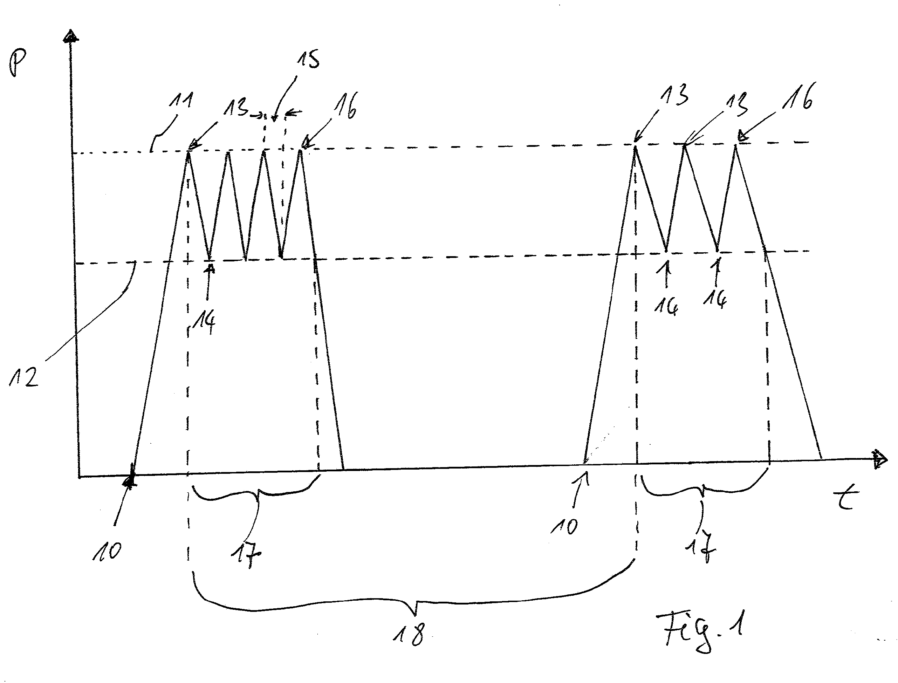

- Figur 1: eine schematische Darstellung eines Diagramms des Drucks im zweiten Schmierstoff über der Zeit.

Figur 1 zeigt schematisch eine Darstellung eines Diagramms, bei dem der Druck des zweiten Schmierstoffes über der Zeit aufgetragen ist. Es ist der Druck in der Zuführleitung zu dem Lager vor einem Ventil, insbesondere Magnetventil, gezeigt.

Beim Zeitpunkt 10 wird die Schmierstoffpumpe in Betrieb gesetzt, so dass sich der Druck in dem zweiten Schmierstoff bzw. der Zuleitung zu dem Lager erhöht, und zwar bis zu einer oberen Druckgrenze 11, bei der das Ventil, vorzugsweise ein Magnetventil, sich bei 13 öffnet, so dass Schmierstoff in das Lager eingespritzt wird. Hierbei reduziert sich der Druck bis zu einer unteren Druckgrenze 12, woraufhin das Ventil bei 14 geschlossen wird. Dieser Vorgang wiederholt sich in Figur 1 viermal. Es wird somit viermal der zweite Schmierstoff in das Lager eingespritzt. Dieses geschieht somit über ein Spülintervall 17 von dem ersten Öffnen des Ventils bis zum letztmaligen Erreichen der unteren Druckgrenze 12 nach dem Signal 16, bei dem das Ventil geöffnet wird und der Betrieb der Pumpe gestoppt wird. Mit 15 ist der Zeitraum dargestellt, in der die Injektion des zweiten Schmierstoffs nach dem dritten Öffnen des Ventils gezeigt ist. Am Ende des Zeitintervalls 17 fällt der Druck im zweiten Schmierstoff bzw. in der Zuleitung zum Lager bis zu einem Umgebungsdruck ab.

Nach einem Zeitabstand 18 der Spülintervalle geschieht das Spülen von neuem. Es kann auch eine Spülpausenzeit vorgegeben sein, die dem Zeitintervall des Zeitpunkts "Ventil öffnen und Stopp der Pumpe" 16 bis Start der Pumpe bei 10 entspricht.

Der zweite Spülvorgang hat drei Zeitintervalle, in der der zweite Schmierstoff in das Lager injiziert wird. Die abfallende Druckflanke ist ein bisschen flacher als beim ersten Spülvorgang. Dies kann darin begründet liegen, dass die Temperatur des zweiten Schmierstoffs oder die Mobilität des zweiten Schmierstoffs im Vergleich zum ersten Spülvorgang in dem zweiten Spülvorgang niedriger ist. Hierdurch baut sich der Druck dann entsprechend langsamer ab.

Der Abstand der Spülintervalle 18 kann auch anders als in Figur 1 definiert werden, beispielsweise dort, wo der Druck P auf der Abszisse beim ersten Spülintervall am Ende ankommt, bis zu dem Moment, wo die Pumpe wieder in Gang gesetzt wird, d.h. bei 10 auf der rechten Seite in Figur 1. Es kann allerdings auch der Abstand 18 noch anders definiert sein. Entsprechend kann auch das Spülintervall 17 so definiert sein, dass es beispielsweise von dem Start der Pumpe 10 bis zum erneuten Erreichen der Abszisse reicht.

Die Erfindung ist durch die beigefügten unabhängigen Ansprüche 1 und 8 definiert, weitere Ausführungsformen sind in den abhängigen Ansprüchen dargestellt.

### Bezuqszeichenliste

- P: Druck
- t: Zeit
- 10: Start Pumpe
- 11: obere Druckgrenze
- 12: untere Druckgrenze
- 13: Ventil öffnen
- 14: Ventil schließen
- 15: Injektion des zweiten Schmierstoffs
- 16: Ventil öffnen und Stopp der Pumpe
- 17: Spülintervall
- 18: Abstand der Spülintervalle

## Patentansprüche

1. Verfahren zum Betreiben einer Windenergieanlage, wobei die Windenergieanlage ein Lager aufweist, das mit einem ersten Schmierstoff geschmiert wird, und ein Ventil zum Aufbauen eines Drucks (P) in einer Zuleitung eines zweiten Schmierstoffs zu dem Lager bis zu einer oberen Druckgrenze (11) vorgesehen ist, wobei das Lager zusätzlich in einem Spülintervall (17) mit dem zweiten Schmierstoff bei dem Druck (P), dessen obere Grenze (11) und dessen untere Grenze (12) vorgebbar sind, gespült wird, indem bei Erreichen der oberen Druckgrenze (11) das Ventil geöffnet wird, so dass der zweite Schmierstoff in das Lager eingelassen wird, wobei der zweite Schmierstoff eine höhere Mobilität als der erste Schmierstoff aufweist und wobei die Menge des in das Lager eingebrachten zweiten Schmierstoffs pro Zeiteinheit wenigstens doppelt so groß ist wie die Menge des in das Lager eingebrachten ersten Schmierstoffs pro Zeiteinheit.

2. Verfahren nach Anspruch 1, **dadurch gekennzeichnet, dass** das Spülen in Spülintervallen (17), insbesondere über eine vorgebbare Spülzeit und/oder mit einer vorgebbaren Menge an zweitem Schmierstoff, ausgeführt wird.

3. Verfahren nach Anspruch 2, **dadurch gekennzeichnet, dass** die zeitlichen Abstände (18) der Spülintervalle (17) vorgebbar sind.

4. Verfahren nach Anspruch 3, **dadurch gekennzeichnet, dass** die zeitlichen Abstände (18) der Spülintervalle (17) von wenigstens einem der folgenden Parameter abhängig sind: einer Umgebungstemperatur, einer Lagertemperatur, einer Drehzahl eines durch das Lager gelagerten Rotors, einer Anzahl von Umdrehungen des durch das Lager gelagerten Rotors und/oder einer Betriebsdauer der Windenergieanlage.

5. Verfahren nach einem der Ansprüche 1 bis 4, **dadurch gekennzeichnet, dass** der Druck (P) beim Einlassen des zweiten Schmierstoffs in das Lager bis zu der unteren Druckgrenze (12) absinkt, woraufhin das Ventil geschlossen wird und der Zufluss des zweiten Schmierstoffs in das Lager solange unterbrochen wird, bis der Druck (P) in der Zuleitung des zweiten Schmierstoffs die obere Druckgrenze (11) erreicht und das Ventil wieder öffnet.

6. Verfahren nach einem der Ansprüche 1 bis 5, **dadurch gekennzeichnet, dass** der zweite Schmierstoff ein Schmierfett der NLGI Kategorie 00 ist oder ein Schmieröl.

7. Verfahren nach einem der Ansprüche 1 bis 6, **dadurch gekennzeichnet, dass** das Verfahren zur Schmierung eines Großwälzlagers verwendet wird.

8. Windenergieanlage mit einem Rotor und einem Lager, in dem der Rotor gelagert ist, wobei eine erste Lagerschmiervorrichtung vorgesehen ist, mittels der eine Fettschmierung mit einem ersten Schmierstoff des Lagers durchgeführt wird oder durchführbar ist, wobei zudem eine zweite Lagerschmiervorrichtung vorgesehen ist, welche ein Schmierstoffreservoir, eine Schmierstoffpumpe und ein Ventil zum Aufbauen eines Drucks (P) in einer Zuleitung eines zweiten Schmierstoffs zu dem Lager bis zu einer oberen Druckgrenze (11) aufweist und mittels welcher das Lager mit einem zweiten Schmierstoff gespült wird oder spülbar ist, wobei das Ventil bei der oberen Druckgrenze (11) sich öffnend oder durch eine Steuervorrichtung öffnend ausgebildet ist, so dass bei Erreichen der oberen Druckgrenze (11) das Ventil geöffnet wird und der zweite Schmierstoff in das Lager eingelassen wird, wobei der zweite Schmierstoff eine höhere Mobilität als der erste Schmierstoff aufweist und wobei die Menge des in das Lager pro Zeiteinheit bringbaren oder eingebrachten zweiten Schmierstoffs wenigstens doppelt so groß ist wie die Menge des in das Lager eingebrachten oder einbringbaren ersten Schmierstoffs.

9. Windenergieanlage nach Anspruch 8, **dadurch gekennzeichnet, dass** das Ventil bei einer unteren Druckgrenze (12) sich schließend oder durch eine Steuervorrichtung schließend ausgebildet ist.

10. Windenergieanlage nach einem der Ansprüche 8 oder 9, **dadurch gekennzeichnet, dass** ein Drucksensor und eine Ventilsteuervorrichtung vorgesehen sind.

11. Windenergieanlage nach einem der Ansprüche 8 bis 10, **dadurch gekennzeichnet, dass** eine Steuervorrichtung vorgesehen ist, mittels der das Spülen des Lagers mit dem zweiten Schmierstoff in Spülintervallen (17) steuerbar ist.

## Claims

1. A method of operating a wind energy installation, wherein the wind energy installation comprises a bearing which is lubricated with a first lubricant, and wherein a valve is provided for building up a pressure (P) up to an upper pressure limit (11) in a supply line of a second lubricant to the bearing, wherein the bearing is additionally flushed in a flushing interval (17) with the second lubricant at the pressure (P), the upper limit (11) and lower limit (12) of which can be specified, by the valve being opened when the upper pressure limit (11) is reached, so that the second lubricant is introduced into the bearing, wherein the second lubricant has a higher mobility than the first lubricant and wherein the quantity of the second lubricant introduced into the bearing per unit of time is at least twice as great as the quantity of the first lubricant introduced into the bearing per unit of time.

2. The method according to claim 1, **characterised in that** the flushing is carried out in flushing intervals (17), in particular over a predeterminable flushing period and / or with a specifiable quantity of the second lubricant.

3. The method according to claim 2, **characterised in that** the time intervals (18) between the flushing intervals (17) can be specified.

4. The method according to claim 3, **characterised in that** the time intervals (18) between the flushing intervals (17) are dependent on at least one of the following parameters: an ambient temperature, a bearing temperature, a rotational speed of a rotor supported by the bearing, a number of revolutions of the rotor supported by the bearing and / or an operating duration of the wind energy installation.

5. The method according to any one of the claims 1 to 4, **characterised in that** the pressure (P) drops to the lower pressure limit (12) when the second lubricant is introduced into the bearing, whereupon the valve is closed and the inflow of the second lubricant into the bearing is interrupted until the pressure (P) in the supply line of the second lubricant reaches the upper pressure limit (11) and the valve opens again.

6. The method according to any one of the claims 1 to 5, **characterised in that** the second lubricant is a lubricating grease of the NLGI grade 00 or a lubricating oil.

7. The method according to any one of the claims 1 to 6, **characterised in that** the method is used for lubricating a large diameter rolling bearing.

8. A wind energy installation comprising a rotor and a bearing in which the rotor is supported, wherein a first bearing lubricating device is provided, by means of which a grease lubrication of the bearing is carried out or can be carried out using a first lubricant, wherein, in addition, a second bearing lubricating device is provided which comprises a lubricant reservoir, a lubricant pump and a valve for building up a pressure (P) up to an upper pressure limit (11) in a supply line of a second lubricant to the bearing, and by means of which second bearing lubricating device the bearing is flushed or can be flushed with a second lubricant, wherein the valve is constructed so as to open at the upper pressure limit (11) or so as to be opened by a control device, so that, when the upper pressure limit (11) is reached, the valve is opened and the second lubricant is introduced into the bearing, wherein the second lubricant has a higher mobility than the first lubricant and wherein the quantity of the second lubricant which can be introduced or which is introduced into the bearing per unit of time is at least twice as great as the quantity of the first lubricant which is introduced or which can be introduced into the bearing.

9. The wind energy installation according to claim 8, **characterised in that** the valve is constructed so as to close at a lower pressure limit (12) or so as to be closed by a control device.

10. The wind energy installation according to any one of the claims 8 or 9, **characterised in that** a pressure sensor and a valve control device are provided.

11. The wind energy installation according to any one of the claims 8 to 10, **characterised in that** a control device is provided by means of which the flushing of the bearing with the second lubricant in flushing intervals (17) can be controlled.

## Revendications

1. Procédé de fonctionnement d'une éolienne, dans lequel l'éolienne présente un palier, qui est lubrifié avec un premier lubrifiant, et une soupape est prévue pour la formation d'une pression (P) dans une conduite d'alimentation d'un deuxième lubrifiant vers le palier jusqu'à une limite de pression supérieure (11), dans lequel le palier est rincé en plus dans un intervalle de rinçage (17) avec le deuxième lubrifiant à la pression (P), dont la limite supérieure (11) et dont la limite inférieure (12) peuvent être prédéfinies, par le fait que lorsque la limite de pression supérieure (11) est atteinte, la soupape est ouverte de sorte que le deuxième lubrifiant est admis dans le palier, dans lequel le deuxième lubrifiant présente une mobilité plus élevée que le premier lubrifiant et dans lequel la quantité du deuxième lubrifiant introduit dans le palier par unité de temps est au moins deux fois aussi grande que la quantité du premier lubrifiant introduit dans le palier par unité de temps.

2. Procédé selon la revendication 1, **caractérisé en ce que** le rinçage est réalisé dans des intervalles de rinçage (17), en particulier sur un temps de rinçage pouvant être prédéfini et/ou avec une quantité de deuxième lubrifiant pouvant être prédéfinie.

3. Procédé selon la revendication 2, **caractérisé en ce que** les laps de temps (18) des intervalles de rinçage (17) peuvent être prédéfinis.

4. Procédé selon la revendication 3, **caractérisé en ce que** les laps de temps (18) des intervalles de rinçage (17) dépendent d'au moins un des paramètres suivants : une température ambiante, une température de palier, une vitesse de rotation d'un rotor logé par le palier, un nombre de tours du rotor logé par le palier et/ou une durée de fonctionnement de l'éolienne.

5. Procédé selon l'une quelconque des revendications 1 à 4, **caractérisé en ce que** la pression (P) diminue lors de l'admission du deuxième lubrifiant dans le palier jusqu'à la limite de pression inférieure (12), ce sur quoi la soupape est fermée et l'afflux du deuxième lubrifiant dans le palier est interrompu jusqu'à ce que la pression (P) dans la conduite d'alimentation du deuxième lubrifiant atteigne la limite de pression supérieure (11) et la soupape s'ouvre de nouveau.

6. Procédé selon l'une quelconque des revendications 1 à 5, **caractérisé en ce que** le deuxième lubrifiant est une graisse de la catégorie NLGI 00 ou une huile de lubrification.

7. Procédé selon l'une quelconque des revendications 1 à 6, **caractérisé en ce que** le procédé est utilisé pour la lubrification d'une couronne d'orientation.

8. Éolienne avec un rotor et un palier, dans lequel le rotor est logé, dans laquelle un premier dispositif de lubrification de palier est prévu, au moyen duquel un graissage avec un premier lubrifiant du palier est effectué ou peut être effectué, dans laquelle en plus un deuxième dispositif de lubrification de palier est prévu, lequel présente un réservoir de lubrifiant, une pompe de lubrifiant et une soupape pour la formation d'une pression (P) dans une conduite d'alimentation d'un deuxième lubrifiant vers le palier jusqu'à une limite de pression supérieure (11) et au moyen duquel le palier est rincé ou peut être rincé avec un deuxième lubrifiant, dans laquelle la soupape est réalisée s'ouvrant à la limite de pression supérieure (11) ou s'ouvrant par un dispositif de commande, de sorte que lorsque la limite de pression supérieure (11) est atteinte, la soupape est ouverte et le deuxième lubrifiant est admis dans le palier, dans laquelle le deuxième lubrifiant présente une mobilité plus élevée que le premier lubrifiant et dans laquelle la quantité du deuxième lubrifiant introduit ou pouvant être amené dans le palier par unité de temps est au moins deux fois aussi grande que la quantité du premier lubrifiant introduit ou pouvant être introduit dans le palier.

9. Éolienne selon la revendication 8, **caractérisée en ce que** la soupape est réalisée se fermant à une limite de pression inférieure (12) ou se fermant par un dispositif de commande.

10. Éolienne selon l'une quelconque des revendications 8 ou 9, **caractérisée en ce qu'**un capteur de pression et un dispositif de commande de soupape sont prévus.

11. Éolienne selon l'une quelconque des revendications 8 à 10, **caractérisée en ce qu'**un dispositif de commande est prévu, au moyen duquel le rinçage du palier avec le deuxième lubrifiant peut être commandé dans des intervalles de rinçage (17).
